# EUROPEAN PATENT SPECIFICATION

(11) **EP 0 383 451 B1**
(45) Date of publication and mention of the grant of the patent: **13.03.1996**
(21) Application number: 90300916.5
(22) Date of filing: 30.01.1990
(51) Int. Cl.: G11B 11/10, G11B 19/20, G11B 19/00, G11B 19/02

(54) **Optical disc recording and reproducing apparatus**
Gerät zum Aufzeichnen und Wiedergeben optischer Platten
Appareil d'enregistrement et de reproduction de disque optique

(30) Priority: 14.02.1989 JP 34486/89
(43) Date of publication of application: 22.08.1990
(73) Proprietor: SONY CORPORATION, Tokyo 141 (JP)
(72) Inventor: Yoshida, Tadao, c/o Patents Division, Shinagawa-ku, Tokyo 141 (JP)
(74) Representative: Thomas, Christopher Hugo

(56) References cited:
- EP-A- 0 241 007
- PATENT ABSTRACTS OF JAPAN, unexamined applicatioons, P field, vol. 11, no. 378, December 10, 1987 THE PATENT OFFICE JAPANESE GOVERNMENT page 19 P 645
- PATENT ABSTRACTS OF JAPAN, unexamined applications, P field, vol. 12, no. 43, February 9, 1988, THE PATENT OFFICE JAPANESE GOVERNMENT page 19 P 664
- PATENT ABSTRACTS OF JAPAN, unexamined applications, P field, vol. 12, no. 86, March 18, 1988 THE PATENT OFFICE JAPANESE GOVERNMENT PAGE 149 P 677

## Description

This invention relates to optical disc recording and reproducing apparatus.

Optomagnetic recording systems are classified into optical modulation systems in which a laser beam forming a recording light to be irradiated on an optomagnetic recording medium is modulated on the basis of an information signal to be recorded, and a magnetic field modulation system in which an external magnetic filed to be applied to an optomagnetic recording medium is modulated on the basis of an information signal to be recorded.

In an optomagnetic disc recording and reproducing apparatus using the magnetic field modulating system, a light bean emitted from a laser light source such as a semiconductor laser element is irradiated to be focused on a recording medium of an optomagnetic disc by an objective lens of an optical pick-up, thereby locally increasing the temperature as compared with non-irradiated portion. In addition, a modulated magnetic field corresponding to an information signal to be recorded is applied to the optomagnetic disc by external magnetic field generating means, thereby inverting the magnetic domain of a vertical magnetic recoding film forming an optomagnetic recording medium of the optomagnetic disc, so recording desired data.

Upon reproduction, switching control is performed so that the light output for the laser light source is reduced to be less than that upon recording, and then the light beam is irradiated on an optomagnetic disc. A light beam reflected by the optomagnetic disc is detected by a photodetector of the optical pick-up, and data recorded on the optomagnetic disc are reproduced.

In such an apparatus, the ability can be significantly improved by increasing the data transfer speed. To do this, the rotational speed of rotary driving means such as a spindle motor for the optomagnetic disc must be set high. Upon recording, it is then necessary that the switching speed for a modulated magnetic field generated from external magnetic field generating means is increased, and the light output from the laser light source is increased in correspondence with the increased rotational speed. Upon reproduction, it is necessary to increase the signal processing speed for detected signal from the photodetector.

If, however, the switching speed for a modulated magnetic field is set high, a magnetic head forming the external magnetic field generating means for generating the modulated magnetic field generates heat. Also, the power consumption of a magnetic head driver is increased. In addition, it is difficult to increase the light output of a semiconductor laser element for recording. Therefore, it is difficult to increase the data transfer speed.

Japanese Patent Application Publication No. JP-A-01 39659 discloses optical disc apparatus according to the pre-characterising part of claim 1 hereof.

According to the present invention there is provided an optical disc apparatus comprising:
driving means for rotationally driving an optical disc; and
control means for controlling the driving means to provide a data transfer speed which is selectable to have different values;
characterised in that:
the apparatus is for reproducing audio data recorded on an optical disc and for reproducing and recording non-audio data from/on an optical disc; and
the control means is so operative that, when reproducing non-audio data for supply to a data processing apparatus the data transfer speed can be selected to a first speed, when reproducing audio data for supply to an audio signal processor the data transfer speed can be selected to be lower than the first speed to provide normal speed playback of the sound, and when recording non-audio data the data transfer speed can be selected to be lower than the first speed.

The invention will now be described by way of example with reference to the accompanying drawings, in which:
Figure 1 is a block diagram showing an embodiment of optomagnetic disc apparatus according to the present invention; and
Figure 2 is a diagram for explaining the operation of the embodiment.

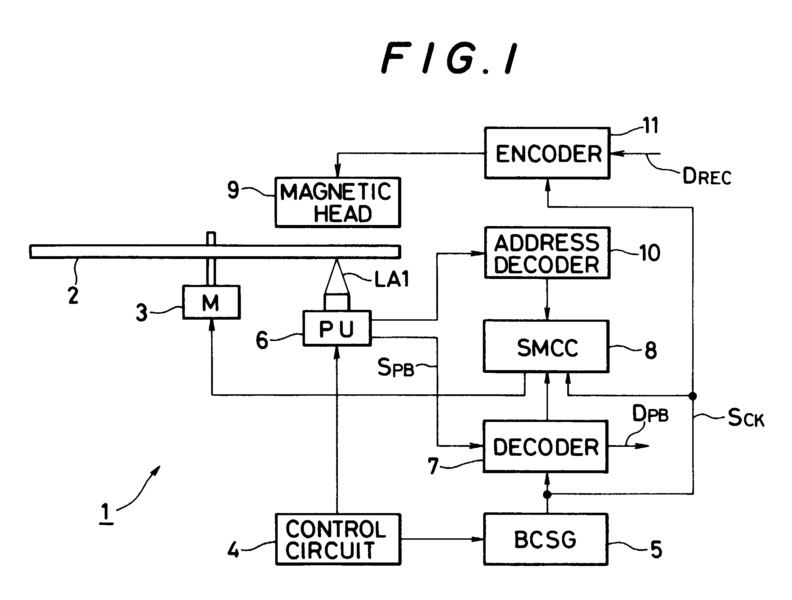

Figure 1 shows an optomagnetic disc recording an reproducing apparatus 1 using a magnetic field modulating system, in which a modulation signal based on an information signal to be recorded is supplied to external magnetic field generating means, and a laser beam is irradiated on an optomagnetic disc 2 while a modulated magnetic field is applied to the disc, thereby recording the information signal. The disc 2 is formed by coating a vertical magnetic film by, for example, deposition or sputtering, on a transparent substrate, for example, of a synthetic resin such as a polycarbonate resin, or glass. A preformat, that is, a so-called pregroove for guiding a recording beam is formed on the disc 2. Upon recording of an information signal on the disc 2, the information signal is recorded along the pregroove. The disc 2 is rotated by a spindle motor (M) 3.

An operation panel (not shown) of the apparatus 1 includes a recording operation section and a switching operation section (audio reproducing operation section). When the apparatus 1 is switched on, a control circuit 4 is set in a data reproducing mode. If the recording operation section (not shown) is operated, the control circuit 4 is switched to a data recording mode. In this embodiment, if an optical pick-up and a signal processing system are designed for compatibility with ordinary compact disc players, the control circuit 4 is switched to an audio signal reproducing mode when the switching operation section (not shown) for performing switching between data recording/reproducing and an audio signal is operated. In each operational mode, the control circuit 4 supplies a control signal corresponding to the operational mode to a basic clock signal generator (BCSG) 5 and an optical pick-up (PU) 6. In this manner, the light output of a semiconductor laser element forming a light source of the pick-up 6 is controlled to switch the operational mode of the apparatus 1.

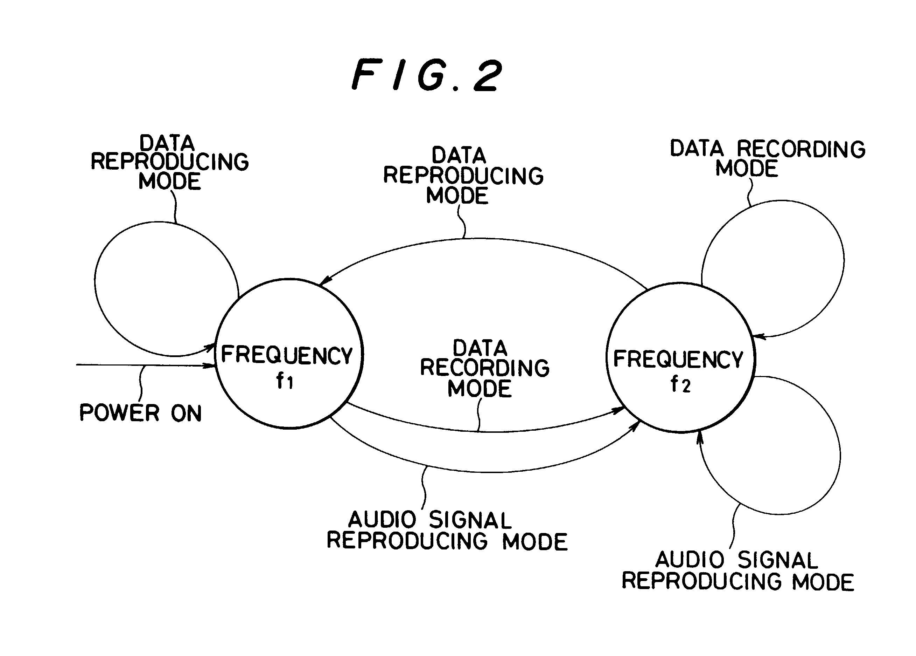

The BCSG 5 comprises an oscillator, and supplies a basic clock signal SCK to a decoder 7, a spindle motor control circuit (SMCC) 8 and an encoder 11. The frequency of the signal SCK is switched on the basis of the control signal from the control circuit 4 in correspondence with each operational mode. In the data reproducing mode, the signal SCK having a frequency f1 is supplied, as shown in Figure 2. In the data recording mode and the audio signal reproducing mode, the signal SCK is switched to a frequency f2. In this case, the relationship between f1 and f2 is:$\text{f1 = 4f2}$

In the data reproducing mode and the audio signal reproducing mode, the pick-up 6 continuously irradiates a light beam LA1 on the disc 2. A photodetector of the pick-up 6 detects a reflected light beam, and a signal representing the detection result is supplied to the decoder 7 which reproduces a signal such as a frame sync signal recorded on the disc 2. In this case, the decoder 7 forms a sync signal of the reproduced frame on the basis of the signal SCK and supplies the reproduced frame sync signal together with the frame sync signal to the SMCC 8.

On the basis of the reproduced frame sync signal and the frame sync signal from the decoder 7, the SMCC 8 detects the rotational speed of the disc 2. Note that this speed detection is performed on the basis of the frequency f1 or f2 of the signal SCK. Therefore, the SMCC 8 compares phases of the reproduced frame sync signal and the frame sync signal. In accordance with the comparison result, the SMCC 8 controls rotation of the motor 3. For this reason, the disc 2 is rotated at a linear velocity determined by the frequency f1 or f2 of the signal SCK.

In this manner, the decoder 7 supplies reproducted data DPB. In the data reproducing mode, the reproducted data DPB are generated on the basis of the signal SCK having the frequency f1. In the audio signal reproducing mode, the reproducted data DPB are generated on the basis of the signal SCK having the frequency f2. In the audio signal reproducing mode, the frequency f2 is selected such that the data transfer speed of the reproducted data DPB coincides with the data transfer speed of an ordinary compact disc player, that is, about 150 kB/sec. The reproducted data DPB are supplied to a signal processor (not shown). The audio signal recorded on the disc 2 is reproduced by this signal processor, which operates on the basis of the signal SCK. In this case, as the information signal to be recorded on the disc 2, information encoded with the same format as the disc format of a compact disc is recorded.

In the data reproducing mode, the frequency f1 is set as the frequency of the signal SCK. As a result, reproducted data DPB having a data transfer speed four times that in the audio signal reproducing mode is obtained. The apparatus 1 supplies the reproducted data DPB to an externally connected information processing apparatus (not shown), such as a computer. In this manner the data transfer speed upon data reproduction is increased.

When the data recording mode is selected, the pick-up 6 initially irradiates with the light beam LA1 having the same intensity as in the data reproducing mode and the audio signal reproducing mode. As in these modes, the SMCC 8 detects the rotational speed of the disc 2 on the basis of the frequency f2 of the signal SCK. The SMCC 8 controls the motor 3 in correspondence with the detected rotational speed. The motor 3 is controlled by the SMCC 8 to rotate the disc 2. Therefore, in the data recording mode, the disc 2 is rotated at a linear velocity determined by the frequency f2 of the signal SCK.

On the basis of the frame sync signal from the decoder 7, the pick-up 6 and a magnetic head 9 are moved in the radial direction of the disc 2 to a predetermined recording region by a moving mechanism (not shown). Thereafter, the pick-up 6 controls the semiconductor laser element to increase the intensity of the light beam LA1 emitted from the semiconductor laser element. At the same time, the pick-up 6 switches irradiation of the light beam LA1 to intermittent irradiation synchronized with the signal SCK. The pick-up 6 causes its photodetector to receive and detect the light beam LA1 reflected by the disc 2. The pick-up 6 supplies a detected signal from the photodetector to an address decoder 10.

When the light beam LA1 is switched to intermittent irradiation as described above, the address decoder 10 detects the frame sync signal from the pregroove on the disc 2, and supplies the detected frame sync signal to the SMCC 8.

Therefore, the SMCC 8 can detect the rotational speed of the disc 2 on the basis of the frame sync signal supplied from the address decoder 10. This rotational speed detection is performed on the basis of the frequency f2 of the signal SCK. The SMCC 8 compares phases of the reproduced frame sync signal and the frame sync signal and controls rotation of the motor 3 in accordance therewith. Therefore, the disc 2 is rotated at a linear velocity determined by the frequency f2 of the signal SCK. That is, even when the intensity of the light beam LA1 is increased for intermittent irradiation, the disc 2 is rotated at a linear velocity determined by the frequency f2 of the signal SCK.

When the light beam LA1 is switched to intermittent irradiation, the encoder 11 drives the magnetic head 9 on the basis of sequentially input data DREC, and the magnetic head 9 generates a magnetic field. In this manner, a magnetic domain orienting direction of a small region of the vertical magnetic film of the disc 2 intermittently irradiated with the light beam LA1 is switched in accordance with the data DREC, so the data DREC are recorded. Therefore, in the data recording mode, since the frequency of the signal SCK is switched from the frequency f1 in the data reproducing mode to the frequency f2, the data DREC can be recorded on the disc 2 at a data transfer speed 1/4 that in the data reproducing mode.

In the apparatus 1, it is difficult to increase the data transfer speed upon recording, because the operation of the pick-up 6 and the magnetic head 9 are limited. Upon reproduction, however, the processing speed for an output signal from the pick-up 6 can be increased. This is of particular advantage because data reproduction is performed much more frequently than data recording.

In the apparatus 1, the data DREC are sometimes continuously recorded in a plurality of recording regions on the disc 2 in the data recording mode. Therefore, when the data recording mode is set, a recording region is detected and the data DREC are recorded on the basis of the frequency f2. In this manner, even when the data transfer speed is to be switched, loss of time in switching the rotational speed of the disc 2 is avoided, so the time required for data recording can be reduced.

In the above arrangement, in the data reproducing mode, the basic clock signal generator 5 supplies the signal SCK having the frequency f1. On the basis of the frequency f1 of the signal SCK, the disc 2 is rotated at a predetermined linear speed. In this manner, the decoder 7 supplies the reproduction data DPB at a data transfer speed based on the signal SCK having the frequency f1.

In the data recording mode, the frequency of the signal SCK is switched to the frequency f2. A recording region of the disc 2 is detected in accordance with the frequency f2. Thereafter, the data DREC are recorded in the recording region at a data transfer speed determined by the frequency f2.

In the audio signal reproducing mode, the disc 2 is rotated on the basis of the frequency f2 as in the data recording mode. The reproducted data DPB reproduced at the data transfer speed determined by the frequency f2 is reproduced as an audio signal.

In the above embodiment, the invention is applied to an optomagnetic disc recording and reproducing apparatus having an audio signal reproducing mode. The invention, however, is not limited to the above embodiment and can be applied to an optomagnetic disc recording and reproducing apparatus for only recording and reproducing data.

In addition, in the above embodiment, the same data transfer speed is set in the audio signal reproducing mode and the data recording mode. However, the data transfer speed may also be switched between the audio signal reproducing mode and the data recording mode.

Furthermore, the invention can also be applied to, for example, an optomagnetic disc recording and reproducing apparatus with an optical modulation system, or an optical disc recording and reproducing apparatus for recording data by utilizing phase transition of a recording film of an optical disc (such phase transition means a change between amorphous and crystalline states of the material). In an apparatus of this latter type, a light beam having a high intensity must be irradiated for the phase transition upon recording. On the contrary, the intensity of the light beam can be small upon reproduction. Therefore, the data transfer speed can easily be increased in a data reproducing mode, but not in a data recording mode. That is, such an apparatus has the same problems as those of an optomagnetic disc recording and reproducing apparatus.

Moreover, in the above embodiment, an optomagnetic disc is rotated at a predetermined linear velocity, but it may be rotated at a predetermined angular velocity.

## Claims

1. An optical disc apparatus comprising:
driving means (3) for rotationally driving an optical disc (2); and
control means (8) for controlling the driving means to provide a data transfer speed which is selectable to have different values;
characterised in that:
the apparatus is for reproducing audio data recorded on an optical disc and for reproducing and recording non-audio data from/on an optical disc; and
the control means (8) is so operative that, when reproducing non-audio data for supply to a data processing apparatus the data transfer speed can be selected to a first speed, when reproducing audio data for supply to an audio signal processor the data transfer speed can be selected to be lower than the first speed to provide normal speed playback of the sound, and when recording non-audio data the data transfer speed can be selected to be lower than the first speed.

2. Apparatus according to claim 1 wherein said control means (8) includes clock generating means (5) for generating different basic clock signals upon recording and reproducing non-audio data on or from said disc (2).

3. Apparatus according to claim 2 wherein said clock generating means (5) generates the basic clock signals such that a basic clock signal upon reproduction of non-audio data is higher than a basic clock signal upon recording of non-audio data.

4. Apparatus according to claim 2 or claim 3 wherein said control means (8) includes decoder means (7) for detecting a frame sync signal from a detected output from a recording and reproducing means (6, 9) and forming a sync signal of a reproduced frame on the basis of the clock signal from said clock generating means (5).

5. Apparatus according to claim 4 wherein said control means (8) includes rotary driving control means for comparing phases of the frame sync signal and the reproduced frame sync signal and controlling said driving means (3) on the basis of a comparison output, and rotationally driving said driving means (3) on the basis of the clock signal from said clock generating means (5).

## Patentansprüche

1. Optisches Plattengerät
mit einer Antriebseinrichtung (3) für den Drehantrieb einer optischen Platte (2)
sowie mit einer Steuereinrichtung (8) zum Steuern der Antriebseinrichtung derart, daß sie eine Datenübertragungsgeschwindigkeit mit verschiedenen auswählbaren Werten liefert,
**dadurch gekennzeichnet,**
daß das Gerät zur Wiedergabe von auf einer optischen Platte aufgezeichneten Audiodaten sowie zur Wiedergabe und Aufzeichnung von Nichtaudiodaten von/auf einer optischen Platte bestimmt ist,
und daß die Steuereinrichtung (8) in der Weise wirksam ist, daß
- bei der Wiedergabe von Nichtaudiodaten für die Übertragung zu einem Datenverarbeitungsgerät ein erster Wert für die Datenübertragungsgeschwindigkeit gewählt werden kann,
- bei der Wiedergabe von Audiodaten zur Übertragung zu einem Audiosignalprozessor die Datenübertragungsgeschwindigkeit niedriger als die erste Geschwindigkeit gewählt werden kann, so daß sich eine normale Abspielgeschwindigkeit für den Ton ergibt,
- und bei der Aufzeichnung von Nichtaudiodaten die Datenübertragungsgeschwindigkeit niedriger als die erste Geschwindigkeit gewählt werden kann.

2. Gerät nach Anspruch 1, bei dem die Steuereinrichtung (8) eine Taktgeneratoreinrichtung (5) aufweist zur Erzeugung verschiedener Grundtaktsignale bei der Aufzeichnung und Wiedergabe von Nichtaudiodaten auf der bzw. von der Platte (2).

3. Gerät nach Anspruch 2, bei dem die Taktgeneratoreinrichtung (5) die Grundtaktsignale in der Weise erzeugt, daß das Grundtaktsignal bei der Wiedergabe von Nichtaudiodaten eine höhere Taktfrequenz besitzt als das Grundtaktsignal bei der Aufzeichnung von Nichtaudiodaten.

4. Gerät nach Anspruch 2 oder 3, bei dem die Taktgeneratoreinrichtung (5) eine Dekodiereinrichtung (7) aufweist zum Detektieren eines Rahmensynchronisiersignals aus einem Detektorausgangssignal einer Aufzeichnungs- und Wiedergabeeinrichtung (6, 9) und zum Erzeugen eines Synchronisiersignals des reproduzierten Rahmens auf der Basis des Taktsignals aus der Taktgeneratoreinrichtung (5).

5. Gerät nach Anspruch 4, bei dem die Steuereinrichtung (8) eine Drehsteuereinrichtung aufweist zum Vergleichen der Phasen des Rahmensynchronisiersignals und des reproduzierten Rahmensynchronisiersignals und zum Steuern der Antriebseinrichtung (3) auf der Basis eines entsprechenden Vergleicherausgangssignals sowie für den Drehantrieb der Antriebseinrichtung (3) auf der Basis des Taktsignals aus der Taktgeneratoreinrichtung (5).

## Revendications

1. Appareil de disque optique comprenant :
un dispositif de commande (3) pour commander de façon tournante un disque optique (2) ; et
un dispositif de commande (8) pour commander le dispositif d'entraînement pour fournir une vitesse de transfert de données qui est sélectionnable pour avoir différentes valeurs ;
caractérisé en ce que :
l'appareil est pour reproduire des données audio enregistrées sur un disque optique et pour reproduire et enregistrer des données non-audio à partir/sur un disque optique ; et
le dispositif de commande (8) est fonctionnel de telle sorte que, lors de la reproduction de données non-audio à appliquer à un appareil de traitement de données la vitesse de transfert de données peut être sélectionnée à une première vitesse, lors de la reproduction de données audio à appliquer à un processeur de signal audio la vitesse de transfert de données peut être sélectionnée pour être inférieure à la première vitesse pour fournir une lecture du son à vitesse normale, et lors de l'enregistrement de données non-audio la vitesse de transfert de données peut être sélectionnée pour être inférieure à la première vitesse.

2. Appareil selon la revendication 1 dans lequel ledit dispositif de commande (8) comprend un dispositif de génération d'horloge (5) pour générer différents signaux d'horloge de base lors de l'enregistrement et de la reproduction de données non-audio sur ou à partir dudit disque (2).

3. Appareil selon la revendication 2 dans lequel ledit dispositif de génération d'horloge (5) génère les signaux d'horloge de base pour qu'un signal d'horloge de base lors de la reproduction de données non-audio soit supérieur au signal d'horloge de base lors de l'enregistrement de données non-audio.

4. Appareil selon la revendication 2 ou la revendication 3 dans lequel ledit dispositif de commande (8) comprend un dispositif décodeur (7) pour détecter un signal de synchronisation de trame à partir d'une sortie détectée du dispositif d'enregistrement et de reproduction (6, 9) et pour former un signal de synchronisation d'une trame reproduite sur la base du signal d'horloge à partir dudit dispositif de génération d'horloge (5).

5. Appareil selon la revendication 4 dans lequel ledit dispositif de commande (8) comprend un dispositif de commande d'entraînement tournant pour comparer des phases du signal de synchronisation de trame et du signal de synchronisation reproduit et pour commander ledit dispositif d'entraînement (3) sur la base d'une sortie de comparaison, et pour entraîner de façon tournante ledit dispositif d'entraînement (3) sur la base du signal d'horloge dudit dispositif de génération d'horloge (5).
